Europäisches Patentamt

European Patent Office

Office européen des brevets

(11) Publication number: **0 254 459**
**A2**

## EUROPEAN PATENT APPLICATION

(21) Application number: **87306118.8**

(22) Date of filing: **10.07.87**

(51) Int. Cl.⁴: **C04B 35/58**

(30) Priority: **25.07.86 GB 8618226**

(43) Date of publication of application:
**27.01.88 Bulletin 88/04**

(84) Designated Contracting States:
**DE FR IT SE**

(71) Applicant: **AE PLC**
**Cawston House Cawston**
**Rugby Warwickshire CV22 7SB(GB)**

(72) Inventor: **Butler, Edwin Granville**
**Myton Cottage Croft Lane**
**Little Shrewley Warwick CV35 7HL(GB)**

(74) Representative: **Newman, Dennis Daniel**
**Ernest et al**
**Trafford Park P.O. Box 20 Ashburton Road**
**West**
**Manchester, M17 1RA(GB)**

(54) **Manufacture of ceramic bodies from silicon nitride.**

(57) In a method of making a ceramic body from silicon nitride by sintering it in admixture with 1-8% by weight of a refractory metallic oxide sintering aid, such as a rare earth metal oxide (eg $Y_2O_3$), silicon oxynitride ($Si_2ON_2$) is included in the mixture in an amount forming 0.5 to 50% by weight of the silicon nitride.

Preferably, the silicon nitride mixture submitted to sintering is obtained by reacting nitrogen with silicon in a compact of silicon, metallic oxide sintering aid and silicon oxynitride.

EP 0 254 459 A2

## Manufacture of ceramic bodies from silicon nitride

This invention relates to the manufacture of ceramic bodies from silicon nitride.

Silicon nitride ($Si_3N_4$) has a three-dimensional structure of such great stability that it is very difficult to sinter it to form ceramic bodies which are acceptably strong at high temperature (1200°C and above). It is common practice to assist sintering by including in the silicon nitride compact to be heated to sintering temperature (at least 1600°C) a refractory metallic oxide, particularly the oxide of a rare earth metal, such as scandia, yttria, lanthana and neodymia. The oxide sintering aid is ordinarily employed in an amount of 1 to 8% by weight of the silicon nitride. Additionally, to improve the oxidation resistance of the sintered product, it is common to supplement the small proportion (about 1% by weight) of oxygen which is always present chemically bound to the surface of the $Si_3N_4$ particles, by adding silica to bring the total level of combined oxygen to 3-5% by weight of the silicon nitride. However, it is difficult by this means to obtain at 1400°C - a significant temperature in this field - a flexural strength which is consistent.

According to the present invention, in the method of making a ceramic body by sintering silicon nitride in admixture with 1-8% by weight of a refractory metallic oxide sintering aid, silicon oxynitride ($Si_2ON_2$) is included in the mixture in an amount forming 0.5 to 50% by weight of the silicon nitride.

Preferably the added silicon oxynitride forms 5-25% by weight of the silicon nitride.

The silicon nitride mixture submitted to sintering is preferably obtained by reacting nitrogen with silicon in a compact of silicon, metallic oxide sintering aid and silicon oxynitride.

Preferably, sintering is carried out under pressure, and particularly under pressure applied isostatically. The refractory metallic oxide sintering aid employed is preferably the oxide of a rare earth metal as aforesaid, particularly yttria.

The invention is further illustrated by the following Example.

### Example

Silicon powder (particle size<25μm) was mixed with 8.3% of its weight of powdered yttria ($Y_2O_3$; particle size <45μm) and 16.7% of its weight of powdered silicon oxynitride ($Si_2ON_2$: average particle size, 0.5μm; surface area, 13.9m²/g). The mixture was ball-milled in isopropanol with silicon nitride balls in a rubber-lined vessel. The isopropanol was then evaporated off, and the dried cake remaining was sieved to obtain a homogeneous powder. This powder was isostatically pressed to a green compact of density 1.56 g/cm³, and the elementary silicon (atomic weight 28) in it was converted to silicon nitride (molecular weight 140) by a conventional reaction-bonding cycle (nitrogen pressure, 1 atmosphere = 0.1 MPa; 7 day period; maximum temperature 1440°C).

The reaction-bonded compact (density 2.5 g/cm³) was then coated with boron nitride powder and sealed in an evacuated tube of silica glass, which formed an impermeable envelope. The compact thus encapsulated was hot-pressed isostatically ("HIPped") in an atmosphere of nitrogen (200 MPa) at 1700°C for 1 hour.

Flexural tests (3 point) were carried out at 20°C, 1200°C and 1400°C on ceramic bodies thus produced, and the results are compared below with those obtained on bodies produced by the same procedure but from a silicon/$Y_2O_3$ composition containing added silica instead of silicon oxynitride.

| Composition (wt%) | Mean Flexure Strength (MPa) | | |
|---|---|---|---|
| | 20°C | 1200°C | 1400°C |
| $Si_3N_4/5Y_2O_3/4SiO_2$ | 769 | 640 | 570 |
| $Si_3N_4/5Y_2O_3/10Si_2ON_2$ | 851 | 666 | 626 |

## Claims

1. A method of making a ceramic body from silicon nitride by sintering it in admixture with 1-8% by weight of a refractory metallic oxide sintering aid, characterised in that silicon oxynitride ($Si_2ON_2$) is included in the mixture in an amount forming 0.5 to 50% by weight of the silicon nitride.

2. A method according to claim 1, in which the added silicon oxynitride forms 5 to 25% by weight of the silicon nitride.

3. A method according to claim 1 or 2, in which the silicon nitride mixture submitted to sintering is obtained by reacting nitrogen with silicon in a compact of silicon, metallic oxide sintering aid and silicon oxynitride.

4. A method according to any of claims 1 to 3, in which sintering is carried out under pressure.

5. A method according to claim 4, in which pressure is applied isostatically.

6. A method according to any of claims 1 to 5, in which the refractory metallic oxide sintering aid is the oxide of a rare earth metal.

7. A method according to claim 6, in which the oxide is yttria.